**Europäisches Patentamt**

**European Patent Office**

**Office européen des brevets**

(19)

(11) **EP 1 398 690 A1**

(12) **DEMANDE DE BREVET EUROPEEN**

(43) Date de publication:
**17.03.2004 Bulletin 2004/12**

(51) Int Cl.7: **G06F 7/552**, G06F 7/556

(21) Numéro de dépôt: **02292253.8**

(22) Date de dépôt: **13.09.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(71) Demandeur: **Schlumberger Systemes SA
92120 Montrouge (FR)**

(72) Inventeurs:
 • **Akkar, Mehdi-Laurent
 94250 Gentilly (FR)**

 • **Courtois, Nicolas
 78000 Versailles (FR)**
 • **Goubin, Louis
 75015 Paris (FR)**

(74) Mandataire: **Renault, Patricia
 Schlumberger Systèmes,
 36-38, rue de la Princesse
 B.P. 45
 78431 Louveciennes Cedex (FR)**

(54) **Procédé et système de génération de signature**

(57)    La présente invention concerne un procédé de génération de signature dans un ensemble électronique pourvu de moyen de traitement, ledit procédé comprenant une étape d'exponentiation $A = B^h$ dans laquelle h=46681534840782777565178593007756405771513 4843197125142436974563133435 145084864.

Le procédé consiste à calculer A à l'aide dudit moyen de traitement sous la forme

$$A := (((z^{128^7})^{128^7})^{128} \times x)^{128^7} \times z,$$

où $x = B^{20442113463973198116557141573632}$ et $z = B^{20442113463973234429045473533888}$.

**FIG.1**

Printed by Jouve, 75001 PARIS (FR)

**Description**

**1. Introduction**

L'algorithme SFLASH est un algorithme cryptographique de signature, inventé par Nicolas Courtois, Louis Goubin et Jacques Patarin. On peut en trouver une description dans l'article suivant :

Jacques Patarin, Louis Goubin, Nicolas Courtois: « Flash, a fast multivariate signature algorithm ». In Cryptographers' Track RSA Conference 2001, San Francisco 8-12 April 2001, Lecture Notes in Computer Science, n° 2020, Springer-Verlag, pp. 298-307, 2001.

SFLASH s'appuie sur un schéma de signature multivariable appelé C*--, proposé par les mêmes auteurs dans l'article suivant :

Jacques Patarin, Nicolas Courtois , Louis Goubin: « C*-+ and HM - Variations around two schemes of T. Matsumoto and H. Imai ». In ASIACRYPT'98, Lecture Notes in Computer Science, n° 2020, Springer-Verlag, n° 1514, pp. 35-49, 1998.

L'idée générale de ce schéma avait déjà été utilisée pour la première fois dans un algorithme appelé C*, proposé par Tsutomu Matsumoto et Hideki Imai dans :

Tsutomu Matsumoto, Hideki Imai: « Public Quadratic Polynomial-tuples for efficient signature-vérification and message-encryption ». In EUROCRYPT'88, Springer-Verlag, Lecture Notes in Computer Science, n° 330, pp. 419-453, 1988,

mais malheureusement cassé par Jacques Patarin dans :

Jacques Patarin: « Cryptanalysis of the Matsumoto and Imai Public Key Scheme of Eurocrypt'88 ». In CRYPTO'95, Lecture Notes in Computer Science, n° 1440, Springer-Verlag, pp. 248-261, 1995.

SFLASH peut être vu comme un cousin éloigné de l'algorithme RSA. Dans son principe, il utilise une fonction d'exponentiation sur une extension algébrique $GF(q^m)$ d'un corps fini $GF(q)$.

**2. Vue générale de l'algorithme SFLASH**

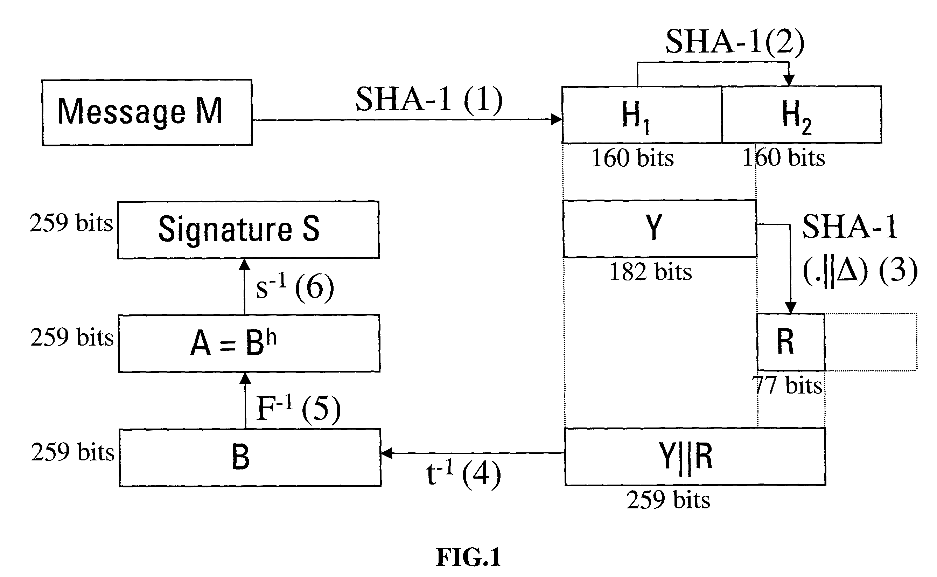

Comme le montre la figure 1 dans laquelle sont représentées de manière schématique les différentes étapes du calcul d'une signature au moyen de l'algorithme SFLASH, le message à signer subit les transformations suivantes :

- Trois applications de la fonction de hachage SHA-1 (étapes (1), (2) et (3)) ;
- Application d'une transformation affine $t^{-1}$ (étape (4)) ;
- Calcul d'une exponentiation : $A = B^h$ (étape (5)) ;
- Application d'une transformation affine $s^{-1}$ (étape (6)).

Dans l'opération d'exponentiation, l'exposant h est fixé une fois pour toutes. Il est défini comme étant égal à l'inverse de $(128^{11} + 1)$ modulo $(128^{37} - 1)$.
Si on écrit h en base 2, on voit que h est égal à :

$$1000000100000010000000111111011111110111111011111110000001000000010000001$$
$$0000000111111011111110111111100000001000000100000010000000111111011111101$$
$$1111101111111000000010000001000000011111101111111011111101111111000000100$$
$$00001000000100000001111110111111101111111000000$$

soit en base 10 :

466815348407827775651785930077564057715134843197125142436974563133435145084864

Comme h est un nombre de 259 bits, on se rend facilement compte que c' est le calcul de A = B$^h$ qui constitue la phase la plus coûteuse en temps pour le calcul d'une signature avec l'algorithme SFLASH. L'objet de la présente demande de brevet consiste à proposer une méthode particulièrement efficace pour effectuer ce calcul d'exponentiation.

Le procédé selon l'invention vise à générer une signature électronique et plus particulièrement avec l'algorithme SFLASH dans un ensemble électronique, et par exemple un système embarqué tel qu'une carte à puce. L'ensemble électronique comprend des moyens de traitement d'information tels qu'un processeur et des moyens de stockage d'information tels qu'une mémoire. Le processus de génération de signature est installé dans la mémoire, par exemple de type ROM dudit ensemble. Le processeur dudit système exécute le processus de calcul en utilisant des valeurs stockées dans une zone secrète d'une mémoire, par exemple de type EEPROM.

### 3. Implémentation de l'exponentiation A = B$^h$

Si on utilise la méthode classique dite « carrés et multiplications » (ou « square and multiply » en anglais), qui est celle la plus souvent utilisée pour les implémentations de l'algorithme RSA, le calcul de A = B$^h$ nécessite 145 multiplications et de 259 carrés, ces opérations de multiplication et de carré étant considérées dans l'extension algébrique GF($128^{37}$) et donc étant particulièrement coûteuses en temps de calcul.

Pour accélérer le calcul, la méthode proposée ici consiste à effectuer le calcul de B$^h$ au moyen de seulement 12 multiplications (au lieu de 145), toujours dans GF($128^{37}$). Cela a un impact considérable sur les performances de SFLASH et permet de gagner un facteur d'environ 10 sur le temps de calcul d'une signature.

Le calcul A = B$^h$ s'effectue à l'aide des moyens de traitement de l'ensemble électronique de la manière suivante :

- $\alpha := (B^2)^2$ ;
- $\beta := B \times \alpha$;
- $\gamma := (\alpha^2)^2$;
- $\delta := \beta \times \gamma$;
- $u := \delta^2 \times \delta \ (= B^{63})$;
- $v := (\gamma^2)^2 \ (= B^{64})$;
- $t := ((v^{128})^{128})^{128} \times u$;
- $w := ((t^{128} \times t)^{128} \times t)^{128} \ (= B^{283691312996224})$;
- $x := ((w \times u)^{128})^{128^7} \ (= B^{204421134639731981165571415736 32})$;
- $z := v^{128^7} \times w \times v \times x \ (= B^{2044211134639732344290454735338 88})$;
- $A := (((z^{128^7})^{128^7})^{128} \times x)^{128^7} \times z$.

Chaque résultat intermédiaire est enregistré dans lesdits moyens de stockage dudit ensemble électronique de manière à être utilisé dans l'étape ultérieure qui le requiert.

Cette façon de conduire le calcul utilise 12 multiplications, 7 carrés, 8 élévations à la puissance 128, et 5 élévations à la puissance $128^7$.

Les opérations « élévation à la puissance 128 » et « élévation à la puissance $128^7$ » sont rapides car, le corps de base sur lequel on effectue le calcul étant précisément GF(128), ces exponentiations se ramènent à une transformation matricielle lorsqu'on considère l'élément de l'extension algébrique GF($128^{37}$) comme un vecteur de dimension 37 sur le corps GF(128). Plus précisément, les éléments B, $\alpha$, $\beta$, $\gamma$, $\delta$, u, v, t, w, x, z, A appartiennent à l'ensemble GF($128^{37}$), qui est défini mathématiquement comme le corps à $128^{37}$ éléments, ou de manière équivalente comme une extension algébrique de degré 37 du corps GF(128) à 128 éléments. Comme le corps GF($128^{37}$) est de caractéristique 2, il est facile de voir que - étant donnés deux éléments X et Y de ce corps - on a toujours $(X+Y)^{128} = X^{128} + Y^{128}$. De plus, pour tout élément X de GF($128^{37}$) et tout élément $\lambda$ de GF(128), on a : $(\lambda.X)^{128} = \lambda.X$. Cela signifie que l'opération « élévation à la puissance 128 » est linéaire sur GF(128). Par ailleurs, par construction d'une extension algébrique de degré 37 sur GF(128), on peut voir GF($128^{37}$) comme un espace vectoriel de dimension 37 sur GF(128). Si on écrit alors un élément X de GF($128^{37}$) comme un 37-uplet $(X_1, X_2, ..., X_{37})$ d'éléments de GF(128), la propriété de linéarité évoquée mentionnée ci-dessus signifie que $X^{128}$ peut s'écrire comme un autre 37-uplet $(Y_1, Y_2, ..., Y_{37})$ qui peut se calculer par la formule $(Y_1, Y_2, ..., Y_{37})^t = M.(X_1, X_2, ..., X_{37})^t$, où M est une matrice fixe de taille $37 \times 37$, dont les éléments (appartenant à GF(128)) valent 0 ou 1 (la notation $^t$ désigne la transposée). Le même raisonnement s'applique

pour $X^{128^7}$, qui peut s'écrire comme un 37-uplet $(Z_1, Z_2, ..., Z_{37})$ que l'on peut calculer par la formule $(Z_1, Z_2, ..., Z_{37})^t$ = M'.$(X_1, X_2, ..., X_{37})^t$, où M' est aussi une matrice fixe de taille 37 × 37, dont les éléments (appartenant à GF(128)) valent 0 ou 1 (précisément, M'=M$^7$).

Par conséquent, la présente invention concerne un procédé de génération de signature dans un ensemble électronique tel qu'une carte à puce pourvu de moyen de traitement et plus particulièrement de moyens de calcul, ledit procédé comprenant une étape d'exponentiation $A = B^h$ dans laquelle h=46681534840782777565178593007756405771513484319712514243697456313343 5 145084864, caractérisé en ce qu'il consiste à calculer à l'aide dudit moyen de calcul A sous la forme $A := (((z^{128^7})^{128^7})^{128} \times x)^{128^7} \times z$, à partir des valeurs x = $B^{20442113463973198116557141573632}$ et z = $B^{20442113463973234429045473533888}$ stockées respectivement dans lesdits moyens de stockage dudit ensemble électronique.

## Revendications

1. Procédé de génération de signature dans un ensemble électronique pourvu de moyen de traitement, ledit procédé comprenant une étape d'exponentiation $A = B^h$ dans laquelle h=46681534840782777565178593007756405-771513484319712514243697456313343 5 145084864, **caractérisé en ce qu'**il consiste à calculer A à l'aide dudit moyen de traitement sous la forme

$$A := (((z^{128^7})^{128^7})128 \times x)^{128^7} \times z,$$

où

$$x = B^{20442113463973198116557141573632}$$

et

$$z = B^{20442113463973234429045473533888}.$$

2. Procédé selon la revendication 1, **caractérisé en ce qu'**il consiste à calculer x à l'aide dudit moyen de traitement de la manière suivante :

$$x := ((w \times u)^{128})^{128^7},$$

où

$$w = B^{283691312996224} \text{ et } u = B^{63},$$

3. Procédé selon l'une des revendications 1 ou 2, **caractérisé en ce qu'**il consiste à calculer z à l'aide dudit moyen de traitement de la manière suivante :

$$z := v^{128^7} \times w \times v \times x,$$

où

$$w = B^{283691312996224},$$

$$x = B^{20442113463973198116557141573632}$$

et

$$v = B^{64}.$$

4. Ensemble électronique comprenant des moyens de stockage d'un processus de calcul, des moyens de traitement dudit processus, **caractérisé en ce qu'**il comprend des moyens de stockage d'une fonction d'exponentiation permettant de générer une signature sous la forme

$$A := (((z^{128^7})^{128^7})^{128} \times x)^{128^7} \times z,$$

où

$$x = B^{2044211346397319811 6557141573632}$$

et

$$z = B^{2044211346397323442 9045473533888}.$$

5. Ensemble électronique selon la revendication 4, **caractérisé en ce qu'**il consiste en une carte à puce.

6. Programme d'ordinateur comprenant des instructions de code de programme pour l'exécution des étapes du procédé selon l'une des revendications 1 à 3 lorsque ledit programme est exécuté dans un ensemble électronique.

FIG.1

EP 1 398 690 A1

**Office européen
des brevets**

**RAPPORT DE RECHERCHE EUROPEENNE**

Numéro de la demande

EP 02 29 2253

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | JACQUES PATARIN, LOUIS GOUBIN, NICOLAS COURTOIS: "Flash a fast multivariate signature algorithm" CRYPTOGRAPHERS TRACK RSA CONFERENCE 2001, 8 - 12 avril 2001, XP002226525 San Francisco * le document en entier * | 1-6 | G06F7/552 G06F7/556 |
| X | JACQUES PATARIN, NICOLAS COURTOIS, LOUIS GOUBIN: "Flash, a fast asymmetric signature scheme for low-cost smartcards" INTERNET ARTICLE, [en ligne] 22 août 2001 (2001-08-22), pages 1-9, XP002226526 Extrait de l'Internet: <URL:http://web.archive.org/web/2001082212 0301/www.minrank.org/flash/> [extrait le 2003-01-09] * alinéa [0001] * * alinéa [05.2] * | 1-6 | |
| A | DONALD E. KNUTH: "The Art of Computer Programming" 1998 , ADDISON WESLEY , UNITED STATES AND CANADA, PAGES 461-481 XP002226527 ISBN: 0-201-89684 * le document en entier * ---<br>-/-- | | **DOMAINES TECHNIQUES RECHERCHES (Int.Cl.7)** G06F |

Le présent rapport a été établi pour toutes les revendications

| Lieu de la recherche | Date d'achèvement de la recherche | Examinateur |
|---|---|---|
| MUNICH | 9 janvier 2003 | Pfab, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 02 29 2253

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GILBERT S ET AL: "CRYPTANALYSIS OF SFLASH" ADVANCES IN CRYPTOLOGY - EUROCRYPT 2002. INTERNATIONAL CONF. ON THE THEORY AND APPLICATIONS OF CRYPTOGRAPHIC TECHNIQUES. AMSTERDAM, NL, APRIL 28 - MAY 2, 2002, LECTURE NOTES IN COMPUTER SCIENCE, BERLIN: SPRINGER, DE, vol. 2332, 28 avril 2002 (2002-04-28), pages 288-298, XP001090353 ISBN: 3-540-43553-0 * alinéa [02.3] * --- | | |
| A | WO 01 31436 A (BULL CP8 ;GOUBIN LOUIS (FR)) 3 mai 2001 (2001-05-03) * abrégé; figure 1 * ----- | | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| MUNICH | 9 janvier 2003 | Pfab, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 2253

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-01-2003

| Document brevet cité au rapport de recherche | Date de publication | Membre(s) de la famille de brevet(s) | Date de publication |
|---|---|---|---|
| WO 0131436 A | 03-05-2001 | FR 2800478 A1 | 04-05-2001 |
| | | WO 0131436 A1 | 03-05-2001 |

EPO FORM P0460

Pour tout renseignement concernant cette annexe : voir Journal Officiel de l'Office européen des brevets, No.12/82